# EUROPÄISCHE PATENTSCHRIFT

(11) **EP 1 955 807 B1**
(45) Veröffentlichungstag und Bekanntmachung des Hinweises auf die Patenterteilung: **12.08.2009**
(21) Anmeldenummer: 08002016.7
(22) Anmeldetag: 04.02.2008
(51) Int. Cl.: B23Q 5/40, B23Q 11/08, F16H 25/20, F16H 25/24

(54) **Linearmodul mit Spindeltriebvorrichtung**
Linear module with ballscrew device
Module linéaire avec système vis-écrou

(30) Priorität: 08.02.2007 DE 102007006249
(43) Veröffentlichungstag der Anmeldung: 13.08.2008
(73) Patentinhaber: Robert Bosch GmbH, 70469 Stuttgart (DE)
(72) Erfinder: Pfister, Steffen, 97464 Niederwerrn (DE)
(74) Vertreter: Maiß, Harald

(56) Entgegenhaltungen:
- EP-A- 0 157 892
- EP-A- 0 726 118
- WO-A-03/076128

## Beschreibung

Die Erfindung betrifft ein Linearmodul umfassend eine Grundplatteneinheit, ein Tischteil, eine Spindeltriebvorrichtung, welche eine mit einer auf der Grundplatteneinheit angebrachten Antriebseinheit in Kraftübertragungsverbindung stehende Spindel und eine mit dem Tischteil verbundene und mit der Spindel im Gewindeeingriff stehende Mutter aufweist, sowie eine die Spindel umgebende Teleskoprohranordnung, welche zwei in einer Bewegungsrichtung teleskopierend ineinander greifende Rohrelemente aufweist, nämlich ein mit der Grundplatteneinheit verbundenes Rohrelement sowie ein mit dem Tischteil verbundenes Rohrelement.

Ein derartiges Linearmodul ist beispielsweise aus der US 5,676,016 (EP-0726118-A) bekannt. Bei diesem Linearmodul ist das mit dem Tischteil verbundene Rohrelement an einer Endplatte befestigt, welche ihrerseits mit dem Tischteil verbunden ist. Dies hat den Nachteil, dass das mit dem Tischteil verbundene Rohrelement zumindest im verlängerten Teleskopzustand über eine relativ große Länge freitragend angeordnet ist, bevor es mit dem mit der Grundplatteneinheit verbundenem Rohrelement in Teleskopeingriff tritt. Gravierender ist aber, dass jede äußere Kraft, der die Endplatte im Betrieb des Linearmoduls ausgesetzt ist, unweigerlich zu Biegemomenten auf das mit dem Tischteil verbundene Rohrelement führt. Die sich hieraus ergebenden Verformungen behindern aber den Teleskopeingriff der beiden Rohrelemente in Folge erhöhter Reibung, wenn sie nicht gar zu einem Verkanten der beiden Rohre führen.

Demgegenüber ist es Aufgabe der vorliegenden Erfindung, ein Linearmodul der eingangs genannten Art derart auszubilden, dass die auf das mit dem Tischteil verbundene Rohrelement einwirkenden Biegemomente reduziert sind.

Diese Aufgabe wird erfindungsgemäß durch ein Linearmodul der eingangs genannten Art gelöst, bei welchem das mit dem Tischteil verbundene Rohrelement mit dem Tischteil auf einem Teilabschnitt seiner Länge über wenigstens einen Steg verbunden ist, und das mit der Grundplatteneinheit verbundene Rohrelement wenigstens einen zur Aufnahme des wenigstens einen Stegs bestimmten Schlitz aufweist. Durch den erfindungsgemäß vorgesehenen Steg ist das Rohrelement nicht nur an seinem einen Ende befestigt, wie dies beim Stand der Technik der Fall ist, sondern verfügt über einen Teilabschnitt seiner Länge über eine stabile Verbindung zu dem Tischteil. Daher kann der Steg Biegemomente sehr effektiv von dem Rohrelement fernhalten.

Hinzu kommt, dass in Folge dieser erhöhten Stabilität gegenüber Biegemomenten die beiden Rohrelemente sogar aneinander geführt sein können, da auf das mit dem Tischteil verbundene Rohrelement ausgeübte Biegemomente nicht wie beim Stand der Technik zu einer Erhöhung der Reibung und somit Behinderung der Teleskopbewegung führen können. Durch dieses enge Aneinanderführen kann der Innenraum der Teleskoprohranordnung auch ohne zusätzliche Abdichtungsmaßnahmen besser vor dem Eindringen von Schmutz geschützt werden. Bei dieser Ausführung kann es sinnvoll sein, eine Gleitbuchse aus Kunststoff zwischen den Metallrohren vorzusehen, so dass unnötiger Verschleiß auf Grund der ungünstigen Gleitpaarung Aluminium/Aluminium vermieden wird.

Um im verkürzten Teleskopzustand sicherstellen zu können, dass der Steg vollständig im Schlitz aufgenommen werden kann, kann die Länge des wenigstens einen Stegs vorteilhafterweise höchstens gleich groß bemessen sein, wie jene des diesem Steg zugeordneten Schlitzes.

In Weiterbildung der Erfindung wird vorgeschlagen, dass die Länge des wenigstens einen Schlitzes derart bemessen ist, dass er auch im verlängerten Teleskopzustand noch vom Tischteil bedeckt ist. Dies hat wiederum Vorteile hinsichtlich des Eindringens von Schmutz, aber auch hinsichtlich des optischen Erscheinungsbilds der Gesamtanordnung.

Um einen möglichst großen Teleskopierweg bereitstellen zu können, kann ferner vorgesehen sein, dass der wenigstens eine Steg an das von der Antriebseinheit entfernte Ende des mit dem Tischteil verbundenen Rohrelements anschließt.

Um sicherstellen zu können, dass auch bei Ausübung von äußeren Kräften auf das Tischteil, insbesondere auf eine stirnseitig an diesem angebrachte Endplatte, diese sich nur in allenfalls geringem Maße auf das mit dem Tischteil verbundene Rohrelement übertragen können, wird in Weiterbildung der Erfindung vorgeschlagen, dass das von der Antriebseinheit entfernte Ende des mit dem Tischteil verbundenen Rohrelements gegenüber einer ihm benachbarten Stirnfläche des Tischteils in Teleskopierrichtung um einen vorbestimmten Abstand zurücksteht.

Um in diesem Fall, oder auch dann, wenn an der von der Antriebseinheit entfernten Stirnfläche des Tischteils keine Endplatte vorgesehen ist, das Eindringen von Schmutz in den Innenraum der Teleskoprohranordnung auf herstellungstechnisch einfache Weise verhindern zu können, wird ferner vorgeschlagen, dass das von der Antriebseinheit entfernte Ende des mit dem Tischteil verbundenen Rohrelements mittels eines Verschlusselements, beispielsweise eines, vorzugsweise aus Kunststoff gefertigten, Stopfens, verschlossen ist. Auf diese Weise kann die Teleskopieranordnung auch mit Schmierstoff, beispielsweise Fett gefüllt werden, so dass eine dauerhafte und wartungsfreie Schmierung der Spindel gewährleistet werden kann.

Um das gesamte Linearmodul vormontiert bereitstellen zu können, wird zudem vorgeschlagen, dass das Tischteil wenigstens ein Durchgangsloch aufweist, welches in einem auf der Grundplatteneinheit montierten Zustand des Tischteils einen Zugriff zu Befestigungsstellen der Grundplatteneinheit gestattet. Auf diese Weise ist ein Zugriff zu den Befestigungsstellen möglich, an welchen die Grundplatteneinheit an einer übergeordneten Baueinheit einer Fertigungsstraße oder dergleichen befestigt werden kann.

Wenn das mit dem Tischteil verbundene Rohrelement von diesem gesondert ausgebildet und mit diesem verschraubt ist, so ermöglicht dies eine besonders einfache Herstellung des Linearmoduls. Grundsätzlich ist es jedoch auch denkbar, dass das mit dem Tischteil verbundene Rohrelement mit diesem einstückig ausgebildet ist, was besondere Vorteile für die Stabilität und damit die Reduzierung der Übertragung von Biegemomenten auf das Rohrelement mit sich bringt. Da dieses Merkmal für sich genommen aus dem Stand der Technik ebenfalls nicht bekannt ist, wird hierfür gesonderter Schutz angestrebt.

In jedem Fall ist es jedoch bevorzugt, dass das Tischteil ausgehend von einem Strangpressprofilelement hergestellt ist, welches vorzugsweise aus einem Leichtmetall oder einer Leichtmetalllegierung, beispielsweise Aluminium, gefertigt ist. Bei einstückiger Ausbildung von Steg und Tischteil kann der Steg in diesem Fall beispielsweise durch Wegfräsen eines Teils der wenigstens einen Verbindungsbrücke des Rohrelements mit dem Tischteil erhalten werden.

Die Erfindung wird im Folgenden an einem Ausführungsbeispiel anhand der beigefügten Zeichnungen näher erläutert werden. Es stellt dar:
- Figur 1: eine perspektivische Gesamtansicht eines erfindungsgemäßen Linearmoduls;
- Figur 2: einen in der in Fig. 1 mit II-II bezeichneten Ebene genommenen Querschnitt des Linearmoduls von Fig. 1;
- Figuren 3 und 4: perspektivische Druntersichten des Tischteils des erfindungsgemäßen Linearmoduls, wobei Fig. 3 den unbearbeiteten Strangpressrohling für das Tischteil und Fig. 4 den bearbeiteten Strangpressrohling zeigt; und
- Figur 5: eine perspektivische Draufsicht der Grundplatteneinheit des erfindungsgemäßen Linearmoduls.

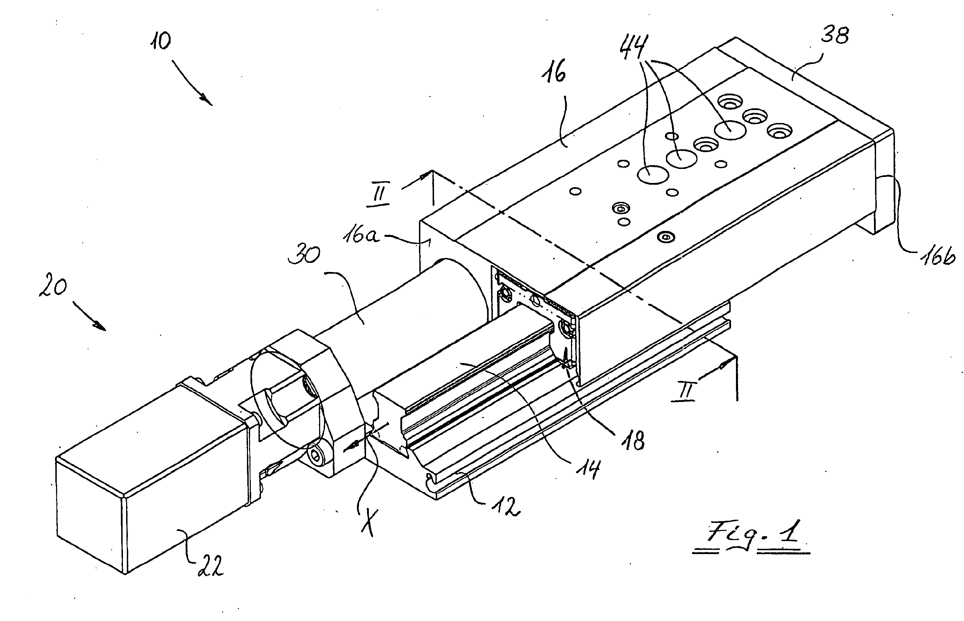

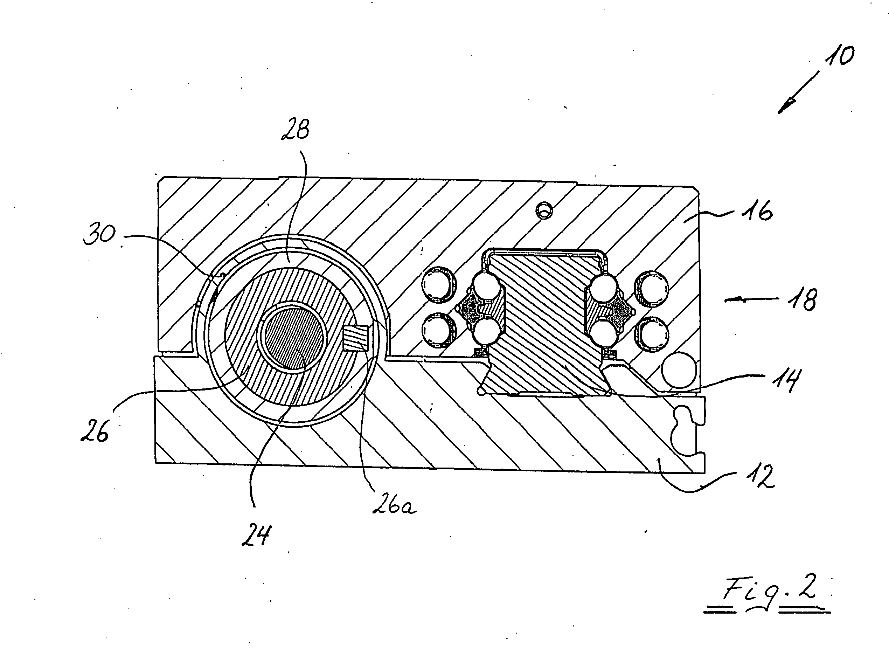

In den Fig. 1 und 2 ist ein erfindungsgemäßes Linearmodul ganz allgemein mit 10 bezeichnet. Es umfasst eine auf einer Grundplatte 12 montierte Schiene 14, die sich einer Längsrichtung X erstreckt. Ferner umfasst sie ein Tischteil 16, welches mittels einer Linearführungsvorrichtung 18 auf der Schiene 14 in deren Längsrichtung X verschiebbar geführt ist. Zum Antrieb des Tischteils 16 relativ zur Schiene 14 dient ein Spindeltrieb 20 mit einer von einem Motor 22 angetriebenen Spindel 24, die mit einer Mutter 26 in Gewindeeingriff steht.

Die Spindel 24 und die Mutter 26 des Spindeltriebs 20 sind, wie insbesondere in Fig. 2 dargestellt ist, von einem inneren Rohrelement 28 und einem äußeren Rohrelement 30 umgeben, welche teleskopierend ineinander greifen. Dabei ist die Mutter 26 über ein Element 26a sowohl rotatorisch als auch translatorisch in dem inneren Rohrelement 28 befestigt. In Fig. 2 erkennt man ferner, dass das äußere Rohrelement 30 mit der Grundplatteneinheit 12 einstückig ausgebildet ist, während das innere Rohrelement 28 dem Tischteil 16 zugeordnet ist.

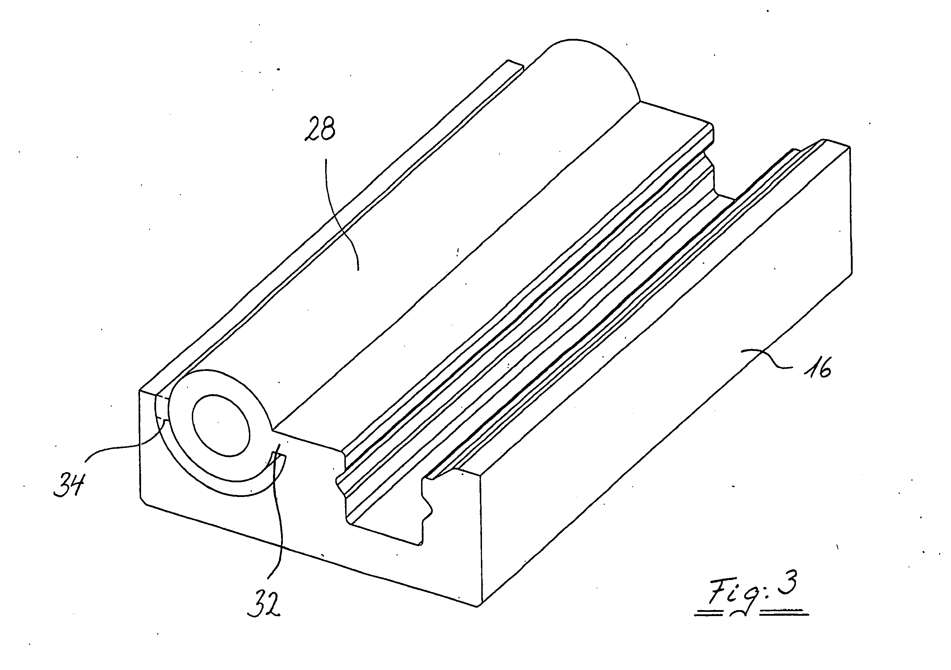

Nachfolgend soll mit Bezug auf die Fig. 3 bis 5 der Aufbau und die Herstellung des Tischteils 16 mit dem inneren Rohrelement 28 und der Grundplatteneinheit 12 mit dem äußeren Rohrelement 30 näher erläutert werden:

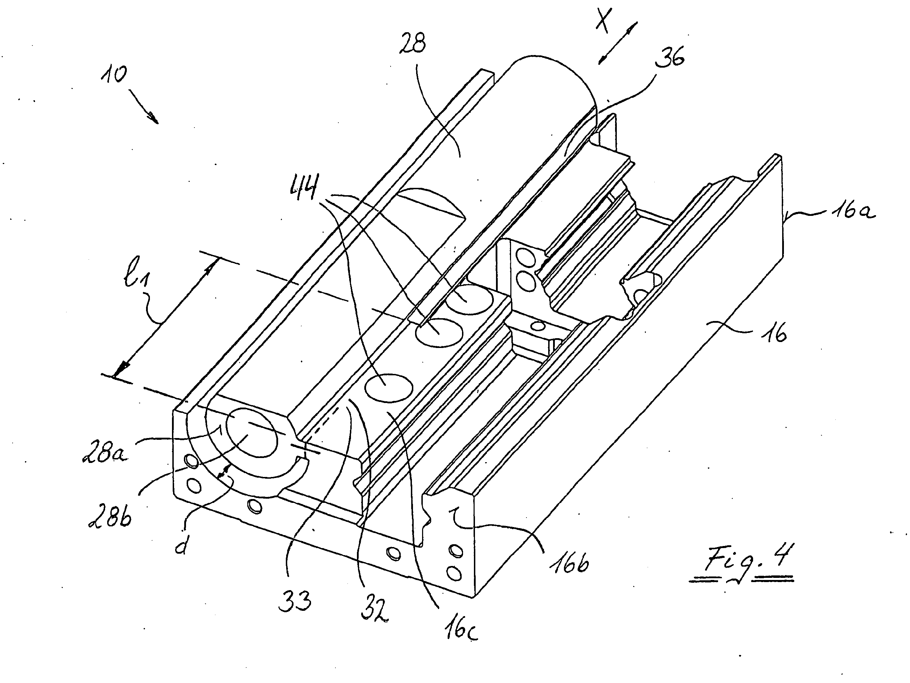

Wie in Fig. 3 dargestellt ist, wird das Tischteil ausgehend von einem Abschnitt eines Strangpressprofils hergestellt. In dem dargestellten Ausführungsbeispiel weist dieses Strangpressprofil das Rohrelement 28 bereits einstückig angeformt auf. Grundsätzlich ist es jedoch auch denkbar, das Rohrelement 28 von dem Tischteil 16 gesondert auszubilden und mit diesem beispielsweise durch Verschrauben zu verbinden, wie in Fig. 4 durch eine gestrichelte Linie ansatzweise angedeutet ist. In dem in Fig. 3 dargestellten Ausführungsbeispiel ist das Rohrelement 28 zudem lediglich über eine einzige Verbindungsbrücke 32 mit dem Tischteil 16 verbunden. Grundsätzlich können aber auch mehrere solche Verbindungsbrücken vorgesehen sein, wie in Fig. 3 bei 34 gestrichelt angedeutet ist.

In einem ersten Bearbeitungsschritt wird, wie in Fig. 4 dargestellt ist, die Verbindungsbrücke 32 von der in Fig. 4 hinteren und in Fig. 1 vorderen Stirnfläche 16a des Tischteils 16 her weggefräst. Diese Fräsung ist in Fig. 4 mit 36 bezeichnet.

In einem zweiten Bearbeitungsschritt wird an dem in Fig. 4 vorderen und in Fig. 1 hinteren Ende 16b des Tischteils ein Stück des Rohrelements 28, der Verbindungsbrücke 32 und des diese tragenden Abschnitts 16c des Tischteils 16 weggefräst, so dass die Stirnfläche 28a des Rohrelements 28 gegenüber der Stirnfläche 16b des Tischteils 16 um einen vorbestimmten Abstand d geringfügig zurückversetzt ist. Auf diese Weise kann verhindert werden, dass äußere Kräfte, die auf eine Endplatte 38 des Tischteils ausgeübt werden (siehe Fig. 1) auf das Rohrelement 28 übertragen werden.

Nach diesen beiden Bearbeitungsschritten bleibt von der Verbindungsbrücke 32 nur noch ein Steg 33 der Länge I₁ übrig.Diese Länge I₁ ist aber derart bemessen, dass Biegemomente in Folge äußerer Kräfte sich nicht oder nur in geringem Maße auf das Rohrelement 28 auswirken können.

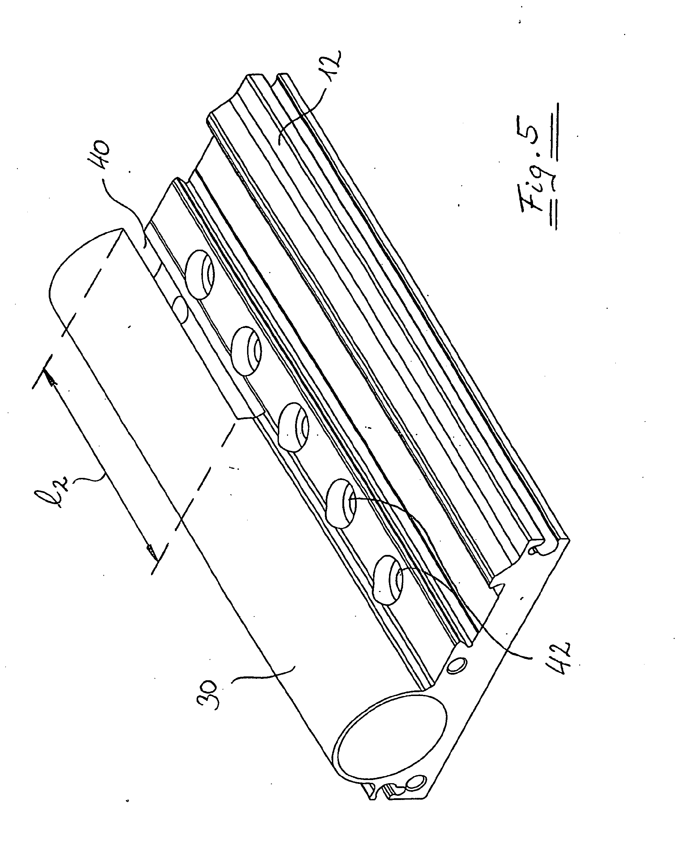

Wie in Fig. 5 dargestellt ist, kann auch die Grundplatteneinheit 12, ausgehend von einem Strangpressprofil, gefertigt werden, an welchem das Rohrelement 30 einstückig angeformt ist. Um im verkürzten Teleskopzustand des Linearmoduls 10 einen Aufnahmeraum für den Steg 33 bereitstellen zu können, ist in das Rohrelement 30 ein seitlicher Schlitz 40 eingebracht worden, dessen Länge I₂ mindestens gleich groß bemessen ist wie die Länge I₁ des Stegs 33. Vorzugsweise ist die Länge I₂ jedoch um mindestens die Distanz d der Rückfräsung des Rohrelements 28 (siehe Fig. 4) größer bemessen als die Länge I₁ des Stegs 33.

Ferner erkennt man in Fig. 5 Aufnahmevertiefungen 42, die zur Aufnahme der Köpfe von Schraubbolzen dienen, mittels derer die Grundplatteneinheit 12 an einer übergeordneten Baueinheit befestigt werden kann. Um das Linearmodul 10 in dem in Fig. 1 dargestellten vormontierten Zustand liefern und gleichwohl die Montage des Linearmoduls 10 an der übergeordneten Baugruppe ermöglichen zu können, sind im Tischteil 16 Durchgangslöcher 44 vorgesehen (siehe auch Fig. 4), welche einen Zugriff zu den Befestigungsstellen 42 mittels eines Befestigungswerkzeugs, beispielsweise einem Schraubendreher, einem Imbusschlüssel oder dergleichen, ermöglichen.

Nachzutragen ist noch, dass das Lumen 28b des Rohrelements 28 im Bereich von dessen Stirnfläche 28a mittels eines nicht dargestellten Stopfens geschlossen werden kann.

## Patentansprüche

1. Linearmodul (10), umfassend:
- eine Grundplatteneinheit (12),
- ein Tischteil (16),
- eine Spindeltriebvorrichtung (20), welche eine mit einer auf der Grundplatteneinheit (12) angebrachten Antriebseinheit (22) in Kraftübertragungsverbindung stehende Spindel (24) und eine mit dem Tischteil (16) verbundene und mit der Spindel (24) im Gewindeeingriff stehende Mutter (26) aufweist, sowie
- eine die Spindel (24) umgebende Teleskoprohranordnung (28/30), welche zwei in einer Bewegungsrichtung teleskopierend ineinander greifende Rohrelemente (28, 30) aufweist, nämlich ein mit der Grundplatteneinheit (12) verbundenes Rohrelement (30) sowie ein mit dem Tischteil (16) verbundenes Rohrelement (28),
**dadurch gekennzeichnet, dass** das mit dem Tischteil (16) verbundene Rohrelement (28) mit dem Tischteil (16) auf einem Teilabschnitt (I₁) seiner Länge über wenigstens einen Steg (33) verbunden ist, und dass das mit der Grundplatteneinheit (12) verbundene Rohrelement (30) wenigstens einen zur Aufnahme des wenigstens einen Stegs (33) bestimmten Schlitz (40) aufweist.

2. Linearmodul nach Anspruch 1,
**dadurch gekennzeichnet, dass** die Länge (I₁) des wenigstens einen Stegs (33) höchstens gleich groß bemessen ist wie jene (I₂) des diesem Steg (33) zugeordneten Schlitzes (40).

3. Linearmodul nach Anspruch 1 oder 2,
**dadurch gekennzeichnet, dass** die Länge (I₂) des wenigstens einen Schlitzes (40) derart bemessen ist, dass er auch im verlängerten Teleskopzustand noch vom Tischteil (16) bedeckt ist.

4. Linearmodul nach einem der Ansprüche 1 bis 3,
**dadurch gekennzeichnet, dass** der wenigstens eine Steg (33) an das von der Antriebseinheit (22) entfernte Ende des mit dem Tischteil (16) verbundenen Rohrelements (28) anschließt.

5. Linearmodul nach einem der Ansprüche 1 bis 4,
**dadurch gekennzeichnet, dass** das von der Antriebseinheit (22) entfernte Ende des mit dem Tischteil (16) verbundenen Rohrelements (28) gegenüber einer ihm benachbarten Stirnfläche (16b) des Tischteils (16) in Teleskoprichtung zurücksteht.

6. Linearmodul nach einem der Ansprüche 1 bis 5,
**dadurch gekennzeichnet, dass** das von der Antriebseinheit (22) entfernte Ende des mit dem Tischteil (16) verbundenen Rohrelements (28) mittels eines Verschlusselements, beispielsweise eines vorzugsweise aus Kunststoff gefertigten Stopfens, verschlossen ist.

7. Linearmodul nach einem der Ansprüche 1 bis 6,
**dadurch gekennzeichnet, dass** das Tischteil wenigstens ein Durchgangsloch (44) aufweist, welches in einem auf der Grundplatteneinheit (12) montierten Zustand des Tischteils (16) einen Zugriff zu Befestigungsstellen (42) der Grundplatteneinheit (12) gestattet.

8. Linearmodul nach einem der Ansprüche 1 bis 7,
**dadurch gekennzeichnet, dass** das mit dem Tischteil (16) verbundene Rohrelement (28) mit diesem verschraubt ist.

9. Linearmodul nach einem der Ansprüche 1 bis 7,
**dadurch gekennzeichnet, dass** das mit dem Tischteil (16) verbundene Rohrelement (28) mit diesem einstückig ausgebildet ist.

10. Linearmodul nach einem der Ansprüche 1 bis 9,
**dadurch gekennzeichnet, dass** das Tischteil (16) ausgehend von einem Strangpressprofilelement hergestellt ist, welches vorzugsweise aus einem Leichtmetall oder einer Leichtmetalllegierung, beispielsweise Aluminium, gefertigt ist.

## Claims

1. Linear module (10), comprising:
- a baseplate unit (12),
- a table part (16),
- a spindle drive device (20) which has a spindle (24) connected in a force-transmitting manner to a drive unit (22) mounted on the baseplate unit (12), and a nut (26) which is connected to the table part (16) and is in threaded engagement with the spindle (24), and also
- a telescopic tube arrangement (28/30) which surrounds the spindle (24) and has two tube elements (28, 30) which engage in each other in a telescopic manner in a direction of movement, namely a tube element (30) which is connected to the baseplate unit (12) and a tube element (28)
which is connected to the table part (16),
**characterized in that** the tube element (28) which is connected to the table part (16) is connected over a subsection (I₁) of its length to the table part (16) via at least one web (33), and **in that** the tube element (30) which is connected to the baseplate unit (12) has at least one slot (40) intended for receiving the at least one web (33).

2. Linear module according to Claim 1, **characterized in that** the length (I₁) of the at least one web (33) is at most the same size as that (I₂) of the slot (40) assigned to said web (33).

3. Linear module according to Claim 1 or 2,
**characterized in that** the length (I₂) of the at least one slot (40) is dimensioned in such a manner that, even in the extended telescopic state, it is still covered by the table part (16).

4. Linear module according to one of Claims 1 to 3,
**characterized in that** the at least one web (33) adjoins the tube element (28), which is connected to the table part (16), at its end which is remote from the drive unit (22).

5. Linear module according to one of Claims 1 to 4,
**characterized in that** the tube element (28) which is connected to the table part (16) is recessed in the telescopic direction at its end remote from the drive unit (22) in relation to an adjacent end surface (16b) of the table part (16).

6. Linear module according to one of Claims 1 to 5,
**characterized in that** the tube element (28) which is connected to the table part (16) is closed at its end remote from the drive unit (22) by means of a closure element, for example a stopper which is preferably manufactured from plastic.

7. Linear module according to one of Claims 1 to 6,
**characterized in that** the table part has at least one trough hole (44) which, in a state of the table part (16) in which it is fitted on the baseplate unit (12), permits access to fastening points (42) of the baseplate unit (12).

8. Linear module according to one of Claims 1 to 7,
**characterized in that** the tube element (28) which is connected to the table part (16) is screwed to the latter.

9. Linear module according to one of Claims 1 to 7,
**characterized in that** the tube element (28) which is connected to the table part (16) is formed integrally therewith.

10. Linear module according to one of Claims 1 to 9,
**characterized in that** the table part (16) is produced from an extruded profile element which is preferably manufactured from a light metal or a light metal alloy, for example aluminium.

## Revendications

1. Module linéaire (10), comprenant :
- une unité de plaque de base (12),
- une partie de table (16),
- un système vis-écrou (20) qui présente une broche (24) en liaison de transfert de force avec une unité d'entraînement (22) montée sur l'unité de plaque de base (12) et un écrou (26) en prise filetée avec la broche (24) et connecté à la partie de table (16), ainsi
- qu'un agencement de tube télescopique (28/30) entourant la broche (24), lequel présente deux éléments tubulaires (28, 30) venant en prise l'un dans l'autre de manière télescopique dans une direction de déplacement, à savoir un élément tubulaire (30) connecté à l'unité de plaque de base (12) ainsi qu'un élément tubulaire (28) connecté à la partie de table (16),
**caractérisé en ce que** l'élément tubulaire (28) connecté à la partie de table (16) est connecté à la partie de table (16) sur une portion partielle (l₁) de sa longueur par le biais d'au moins une nervure (33), et **en ce que** l'élément tubulaire (30) connecté à l'unité de plaque de base (12) présente au moins une fente (40) prévue pour recevoir l'au moins une nervure (33).

2. Module linéaire selon la revendication 1,
**caractérisé en ce que** la longueur (l₁) de l'au moins une nervure (33) a une dimension maximale égale à celle (l₂) de la fente (40) associée à cette nervure (33).

3. Module linéaire selon la revendication 1 ou 2,
**caractérisé en ce que** la longueur (l₂) de l'au moins une fente (40) est dimensionnée de telle sorte qu'elle soit encore recouverte par la partie de table (16) même dans l'état télescopique étiré.

4. Module linéaire selon l'une quelconque des revendications 1 à 3,
**caractérisé en ce que** l'au moins une nervure (33) se raccorde à l'extrémité éloignée de l'unité d'entraînement (22) de l'élément tubulaire (28) connecté à la partie de table (16).

5. Module linéaire selon l'une quelconque des revendications 1 à 4,
**caractérisé en ce que** l'extrémité éloignée de l'unité d'entraînement (22) de l'élément tubulaire (28) connecté à la partie de table (16) est en retrait par rapport à une surface frontale adjacente (16b) de la partie de table (16) dans la direction de télescopage.

6. Module linéaire selon l'une quelconque des revendications 1 à 5,
**caractérisé en ce que** l'extrémité éloignée de l'unité d'entraînement (22) de l'élément tubulaire (28) connecté à la partie de table (16) est fermée au moyen d'un élément de fermeture, par exemple un bouchon fabriqué de préférence en plastique.

7. Module linéaire selon l'une quelconque des revendications 1 à 6,
**caractérisé en ce que** la partie de table présente au moins un trou traversant (44), qui fournit dans un état monté sur l'unité de plaque de base (12) de la partie de table (16), un accès à des points de fixation (42) de l'unité de plaque de base (12).

8. Module linéaire selon l'une quelconque des revendications 1 à 7,
**caractérisé en ce que** l'élément tubulaire (28) connecté à la partie de table (16) est vissé à celle-ci.

9. Module linéaire selon l'une quelconque des revendications 1 à 7, **caractérisé en ce que** l'élément tubulaire (28) connecté à la partie de table (16) est réalisé d'une seule pièce avec celle-ci.

10. Module linéaire selon l'une quelconque des revendications 1 à 9,
**caractérisé en ce que** la partie de table (16) est fabriquée à partir d'un élément profilé filé qui est de préférence fabriqué en un métal léger ou un alliage de métaux légers, par exemple en aluminium.
